# EUROPEAN PATENT SPECIFICATION

(11) **EP 2 034 496 B1**
(45) Date of publication and mention of the grant of the patent: **23.10.2013**
(21) Application number: 07741923.2
(22) Date of filing: 19.04.2007
(51) Int. Cl.: H01G 4/252, H01G 4/232, H01G 4/30, H01G 13/00

(54) **CERAMIC ELECTRONIC COMPONENT AND METHOD FOR MANUFACTURING SAME**
KERAMISCHE ELEKTRONISCHE KOMPONENTE UND HERSTELLUNGSVERFAHREN DAFÜR
COMPOSANT ÉLECTRONIQUE EN CÉRAMIQUE ET SON PROCÉDÉ DE FABRICATION

(30) Priority: 28.06.2006 JP 2006177479
(43) Date of publication of application: 11.03.2009
(73) Proprietor: Murata Manufacturing Co. Ltd., Nagaokakyo-shi, Kyoto 617-8555 (JP)
(72) Inventor: KAYATANI, Takayuki c/o (A170) Intellectual Property Department, Nagaokakyo-shi, Kyoto; 617-8555 (JP)
(74) Representative: Schoppe, Fritz
(86) International application number: PCT/JP2007/058487
(87) International publication number: WO 2008/001542

(56) References cited:
- WO-A1-2004/087608
- JP-A- 10 284 343
- JP-A- 10 284 343
- JP-A- 11 219 849
- US-A1- 2005 012 200

## Description

### Technical Field

The present invention relates to a ceramic electronic component and a method for manufacturing the same. In particular, it relates to the structure of a terminal electrode included in a ceramic electronic component and a method for manufacturing the same.

### Background Art

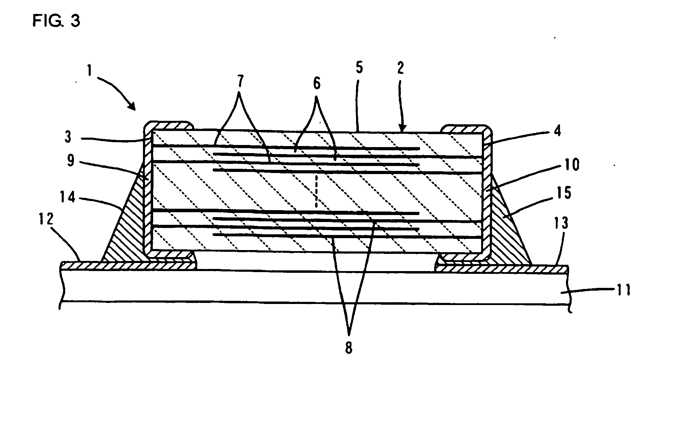

Examples of ceramic electronic components significant for the present invention include laminated ceramic electronic components, e.g., laminated ceramic capacitors. Fig. 3 is a sectional view showing a conventional laminated ceramic capacitor 1.

The laminated ceramic capacitor 1 includes an electronic component main body 2 formed from ceramic. The electronic component main body 2 has two end surfaces 3 and 4 opposite to each other and a side surface 5 joining them. The electronic component main body 2 includes a plurality of dielectric ceramic layers 6 laminated and internal electrodes 7 and 8 disposed along specific interfaces between the dielectric ceramic layers 6.

Furthermore, the laminated ceramic capacitor 1 includes terminal electrodes 9 and 10 disposed in such a way as to cover the end surfaces 3 and 4, respectively, of the electronic component main body 2 and extend to a part of the side surface 5 from each of the end surfaces 3 and 4. The internal electrodes 7 are electrically connected to one terminal electrode 9, and the internal electrodes 8 are electrically connected to the other terminal electrode 10. The internal electrodes 7 and the internal electrodes 8 are disposed alternately in the lamination direction.

The terminal electrodes 9 and 10 are not shown in detail in Fig. 3. However, usually, the terminal electrodes 9 and 10 include thick film layers formed by applying an electrically conductive metal paste to predetermined regions of the surfaces of the electronic component main body 2, followed by baking and plating layers formed by subjecting the thick film layers to a plating treatment.

In the practical use, as shown in Fig. 3, the laminated ceramic capacitor 1 is allowed to come into the state of being mounted on a wiring substrate 11. For more details, solder fillets 14 and 15 are formed by soldering on electrically conductive lands 12 and 13 disposed on the wiring substrate 11, and the terminal electrodes 9 and 10 are allowed to come into the state of being electrically connected through the solder fillets 14 and 15, respectively.

In the formation of the thick film layers serving as substrates of the terminal electrodes 9 and 10 in the laminated ceramic capacitor 1, since a glass component contained in the electrically conductive metal paste serving as the thick film layers reacts with the ceramic on the electronic component main body 2 side, a fragile reaction layer is formed at the interface between the thick film layer and the electronic component main body 2. Consequently, if a relatively large stress is applied to an end edge of the thick film layer, cracking originating therefrom may occur in the electronic component main body 2. For example, if a stress due to bending of the wiring substrate 11 is applied while the laminated ceramic capacitor 1 is mounted on the wiring substrate 11, as shown in Fig. 3, a crack may progress from the above-described end edge of the thick film layer toward the internal electrode 7 or 8. In some cases, a crack reaches the internal electrode 7 or 8 and, thereby, a short-circuit failure of the laminated ceramic capacitor 1 may occur.

In order to solve the above-described problems, it has been proposed that an electrically conductive resin layer is interposed between the thick film layer and the plating layer included in the terminal electrode (For example, refer to Patent Documents 1 and 2). According to the technology described in Patent Documents 1 and 2, a stress from the outside is absorbed by deformation of the electrically conductive resin layer and, thereby, an occurrence of cracking or the like in the electronic component main body is prevented. In addition, regarding an excessive stress exceeding an acceptable range, peeling is effected at the interface between the thick film layer and/or the plating layer and the electrically conductive resin layer and, thereby, the stress is relaxed so as to prevent an occurrence of cracking or the like in the electronic component main body.

Regarding the terminal electrode having the above-described structure, when a stress larger than or equal to a predetermined value is applied, this stress is relaxed by effecting interlayer peeling in the terminal electrode. Therefore, the bonding force at the interface where such interlayer peeling is designed to occur is set at a relatively low value. Consequently, in particular, there is a problem in that the end portion of the terminal electrode is vulnerable to a tensile stress.

More specifically, for example, in the case where a plating layer is formed, a laminated ceramic capacitor is carried during production, or a laminated ceramic capacitor is mounted on a wiring substrate by soldering, the plating layer disposed on the electrically conductive resin layer applies a tensile stress to the electrically conductive resin layer, and this stress concentrates on an end edge of the plating layer, that is, the end edge of the electrically conductive resin layer. Consequently, the electrically conductive resin layer may be peeled while the end edge thereof serves as a starting point. If the electrically conductive resin layer is peeled from the beginning of mounting of the laminated ceramic capacitor, as described above, when a large stress is applied to the laminated ceramic capacitor afterward, the electrically conductive resin layer may not be able to exert an intrinsic stress relaxation ability. As a result, cracking may occur in the laminated ceramic capacitor, and short-circuit failure may occur.
Patent Document 1: Japanese Patent No. 3363369
Patent Document 2: Japanese Unexamined Patent Application Publication No. 10-284343

### Summary of the Invention

Accordingly, it is an object of the present invention to provide a ceramic electronic component capable of solving the above-described problems and a method for manufacturing the same.

This object is achieved by an electronic ceramic component of claim 1, and by a method of claim 3.

The present invention, as defined by the features of independent claims 1 and 3, is directed to an ceramic electronic component including an electronic component main body, which is formed from ceramic and which has two end surfaces opposite to each other and a side surface joining them, and terminal electrodes disposed in such a way as to cover each of the end surfaces of the electronic component main body and extend to a part of the side surface from each of the end surfaces. In order to solve the above-described technical problems, the present invention as defined by the features of independent claims 1 and 3 is characterized by having the following configuration, in particular the following configuration related to the terminal electrode.

That is, in the ceramic electronic component according to the present invention, the terminal electrode includes a thick film layer which is a thick film formed from an electrically conductive metal by baking, an electrically conductive resin layer containing a thermosetting resin and electrically conductive fillers, and a plating layer formed from an electrically conductive metal plating film. The thick film layer is disposed on each of the end surfaces and a part of the side surface of the electronic component main body. The electrically conductive resin layer is disposed in such a way as to cover the thick film layer and extend beyond the end edge of the thick film layer by a dimension of 100 µm or more on the side surface. The electrically conductive resin layer has a region substantially not containing the filler at an end portion of the part located on the side surface. The plating layer is disposed in such a way as to cover the electrically conductive resin layer except a region having a width of 50 µm or more and extending along the end edge of the electrically conductive resin layer.

Preferably, the electrically conductive resin layer has a bonding force within the range of 0.3 to 10 N/mm² with respect to the electronic component main body.

In a preferred embodiment, a phenol resin is used as the thermosetting resin contained in the electrically conductive resin layer and a silver-coated copper powder is used as the electrically conductive filler contained in the electrically conductive resin layer.

The present invention is also directed to a method for manufacturing a ceramic electronic component having the above-described characteristic configuration.

The method for manufacturing a ceramic electronic component according to the present invention includes the steps of preparing an electronic component main body which is formed from ceramic and which has two end surfaces opposite to each other and a side surface joining them and forming terminal electrodes in such a way as to cover each of the end surfaces of the electronic component main body and extend to a part of the side surface from each of the end surfaces.

In the step of forming terminal electrodes, the step of applying an electrically conductive metal paste to each of the end surfaces and a part of the side surface of the electronic component main body and baking the electrically conductive metal paste so as to form a thick film layer is conducted first. Thereafter, the step of applying an electrically conductive resin paste is conducted, followed by drying and heat-curing, wherein the electrically conductive resin paste having a thixotropic property to exhibit a viscosity of 200 Pa·s or less at a shear rate of 0.1 s⁻¹ and containing a thermosetting resin and electrically conductive fillers is applied in such a way as to cover the above-described thick film layer and extend beyond the end edge of the thick film layer by a dimension of 100 µm or more on the side surface, followed by drying and heat-curing, so as to form an electrically conductive resin layer. Subsequently, the step of forming an electrically conductive metal plating film on the electrically conductive resin layer by electroplating so as to form a plating layer is conducted.

In the method for manufacturing a ceramic electronic component according to the present invention, preferably, a paste having a bonding force within the range of 0.3 to 10 N/mm² after curing with respect to the electronic component main body is used as the electrically conductive resin paste for forming the electrically conductive resin layer. Advantages

Regarding the terminal electrode of the ceramic electronic component according to the present invention, the end edge of the electrically conductive resin layer serving as an intermediate layer is located at a position beyond the end edge of the thick film layer serving as a substrate by a dimension of 100 µm or more, and the end edge of the surface plating layer is located at a position got back from the end edge of the electrically conductive resin layer by a width of 50 µm or more.

Consequently, the electrically conductive resin layer comes into the state of covering the electronic component main body in a region having a width of 100 µm or more beyond the end edge of the thick film layer, and concentration of the stress on the end edge, which becomes a starting point of cracking, of the thick film layer can be relaxed.

Furthermore, the end edge of the plating layer is displaced from the end edge of the electrically conductive resin layer by a width of 50 µm or more and, therefore, the point, on which the stress applied from the plating layer to the electrically conductive resin layer is concentrated, is displaced from the end edge of the electrically conductive resin layer. Consequently, the end edge of the electrically conductive resin layer is sufficiently displaced from the end edge of the plating layer on which the stress is concentrated during formation of the plating layer, during carrying in the production of the laminated ceramic capacitor, during soldering to the terminal electrode in mounting, and the like. Therefore, undesirable occurrence of peeling of the electrically conductive resin layer due to such a stress can be prevented.

Regarding the ceramic electronic component according to the present invention, in a manner similar to those described in Patent Documents 1 and 2, the electrically conductive resin layer absorbs the stress from the outside. If the stress from the outside exceeds an acceptable range, the electrically conductive resin layer is peeled. In every case, an occurrence of cracking in the electronic component main body can be prevented, and a serious accident, e.g., burnout or smoking, of the ceramic electronic component can be prevented.

In the present invention, if the electrically conductive resin layer has a bonding force within the range of 0.3 to 10 N/mm² with respect to the electronic component main body, the stress relaxation ability intrinsic to the electrically conductive resin layer can be exerted sufficiently.

In the present invention, if the silver-coated copper powder is used as the electrically conductive filler contained in the electrically conductive resin layer, oxidation of the surface of the electrically conductive resin layer is prevented. In addition, the absolute value of silver is reduced and, thereby, migration of silver can be reduced. In the case where the phenol resin is used as the thermosetting resin contained in the electrically conductive resin layer, a reducing effect can be exerted during heat-curing and, thereby, oxidation of a part, which is not coated with silver, of the surface of the copper powder can be prevented.

Regarding the method for manufacturing a ceramic electronic component according to the present invention, the electrically conductive resin paste having a thixotropic property to exhibit a viscosity of 200 Pa·s or less at a shear rate of 0.1 s⁻¹ is applied for forming the electrically conductive resin layer. Therefore, a region substantially not containing the filler can easily be formed at an end portion of the electrically conductive resin layer after heat-curing.

That is, the shear rate of 0.1 s⁻¹ as the viscosity measurement condition corresponds to the state in which almost no external force is applied to the electrically conductive resin paste. It can be said that the viscosity of 200 Pa·s or less under this condition is a significantly low viscosity (the state of being easily fluidized), as compared with the paste viscosity to be used usually. Since the electrically conductive resin layer is formed by using the electrically conductive resin paste having such a low viscosity, in the case where the electrically conductive resin paste is applied in such a way as to cover the thick film layer on the electronic component main body and extend beyond the end edge of the thick film layer by a dimension of 100 µm or more on the side surface, the electrically conductive resin paste itself tends to spread through wetting toward the midsection between end surfaces of the electronic component main body. However, the electrically conductive fillers contained in the electrically conductive resin paste are in contact with each other and, thereby, a force facilitating the mutual bonding is exerted, so that the fillers tend to stay where they are. As a result, the electrically conductive fillers hardly move from the positions where the fillers are applied originally, and merely a solvent and a resin component dissolved therein spread through wetting. Consequently, a region substantially not containing the electrically conductive filler can be provided at the end portion of the electrically conductive resin layer.

### Brief Description of Drawings

Fig. 1 is a sectional view showing a laminated ceramic capacitor 21 according to an embodiment of the present invention.
Fig. 2 is a sectional view of a magnified portion C shown in Fig. 1.
Fig. 3 is a sectional view showing a known laminated ceramic capacitor 1 significant for the present invention and shows the state of mounting on a wiring substrate 11. Reference Numerals
   21 laminated ceramic capacitor
   22 electronic component main body
   23, 24 end surface
   25 side surface
   26 dielectric ceramic layer
   29, 30 terminal electrode
   31 thick film layer
   32 electrically conductive resin layer
   33 plating layer
   34 end edge of thick film layer
   35 filler-free region
   36 end edge of plating layer
   37 end edge of electrically conductive resin layer

### Best Modes for Carrying Out the Invention

A laminated ceramic capacitor will be described below as an example of a ceramic electronic component according to the present invention as defined by the features of independent claims 1 and 3.

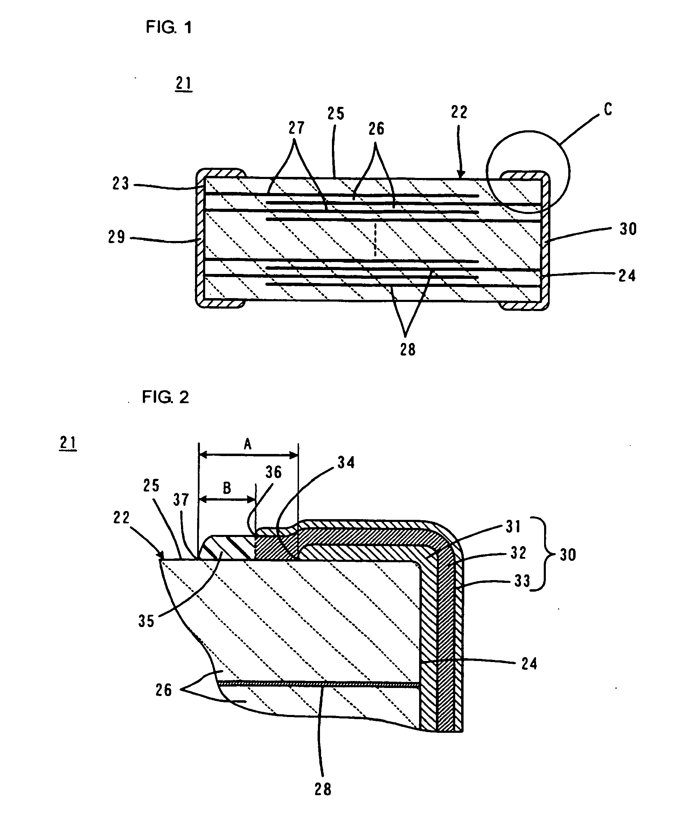

Fig. 1 is a sectional view showing a laminated ceramic capacitor 21 according to an embodiment of the present invention. Fig. 2 is a sectional view of a magnified portion C shown in Fig. 1. The laminated ceramic capacitor 21 shown in Fig. 1 and Fig. 2 has substantially the same structure as the structure of the laminated ceramic capacitor 1 shown in Fig. 3 except the structure of the terminal electrode.

The laminated ceramic capacitor 21 includes an electronic component main body 22 formed from ceramic. The electronic component main body 22 has two end surfaces 23 and 24 opposite to each other and a side surface 25 joining them. Furthermore, the electronic component main body 22 includes a plurality of dielectric ceramic layers 26 laminated and internal electrodes 27 and 28 disposed along specific interfaces between the dielectric ceramic layers 26.

The laminated ceramic capacitor 21 includes terminal electrodes 29 and 30 disposed in such a way as to cover the end surfaces 23 and 24, respectively, of the electronic component main body 22 and extend to a part of the side surface 25 from each of the end surfaces 23 and 24, respectively. The internal electrodes 27 are electrically connected to one terminal electrode 29, and the internal electrodes 28 are electrically connected to the other terminal electrode 30. The internal electrodes 27 and internal electrodes 28 are disposed alternately in the lamination direction.

In the above-described laminated ceramic capacitor 21, the terminal electrodes 29 and 30 have a characteristic structure. Fig. 2 shows a part of one terminal electrode 30 under magnification. Since the terminal electrode 30 shown in Fig. 2 and the other terminal electrode 29 have substantially the same structure, the one terminal electrode 30 will be described below in detail.

As shown in Fig. 2, the terminal electrode 30 includes a thick film layer 31 which is a thick film formed from an electrically conductive metal by baking, an electrically conductive resin layer 32 containing a thermosetting resin and electrically conductive fillers, and a plating layer 33 formed from an electrically conductive metal plating film.

Examples of electrically conductive metals used for constituting the thick film layer 31 include copper. Examples of thermosetting resins contained in the electrically conductive resin layer 32 include phenol resins, e.g., a resol type phenol resin. Examples of electrically conductive fillers contained in the electrically conductive resin layer 32 include a silver-coated copper powder. In many cases, the plating layer 33, although not shown in Fig. 2, is usually composed of a plurality of layers, for example, a nickel plating film and a tin plating film disposed thereon.

As described above, if the silver-coated copper powder is used as the electrically conductive filler contained in the electrically conductive resin layer 32, oxidation of the surface of the electrically conductive resin layer 32 is prevented. In addition, the absolute value of silver is reduced and, thereby, migration of silver can be reduced. In the case where the phenol resin is used as the thermosetting resin contained in the electrically conductive resin layer 32, a reducing effect can be exerted during heat-curing and, thereby, oxidation of a part, which is not coated with silver, of the surface of the copper powder can be prevented.

The thick film layer 31 is disposed on the end surface 24 and a part of the side surface 25 of the electronic component main body 22.

The electrically conductive resin layer 32 is disposed in such a way as to cover the above-described thick film layer 31 and extend beyond the end edge 34 of the thick film layer 31 by a dimension A of 100 µm or more on the side surface 25. The electrically conductive resin layer 32 covers directly the electronic component main body 22 in the portion of this dimension A. The electrically conductive resin layer 32 has a filler-free region 35 substantially not containing the electrically conductive filler and being disposed at an end portion of the part located on the side surface 25. In Fig. 2, the boundary between the filler-free region 35 and the other region of the electrically conductive resin layer 32 is indicated by a clear broken line. However, such a clear boundary does not appear in practice.

The plating layer 33 is disposed in such a way as to cover the electrically conductive resin layer 32 except a region having a width B of 50 µm or more and extending along the end edge 37 of the electrically conductive resin layer 32. The plating layer 33 is formed by electroplating and, therefore, is not formed on the filler-free region 35, as described later. Consequently, the region having the width B and not provided with the plating layer 33 of the electrically conductive resin layer 32 corresponds to the filler-free region 35.

The laminated ceramic capacitor 21 can be produced as described below.

The electronic component main body 22 produced by a known process is prepared. The electrically conductive metal paste is prepared. The electrically conductive metal paste is applied to each of the end surfaces 23 and 24 and a part of the side surface 25 of the electronic component main body 22, followed by baking. In this manner, the thick film layer 31 is formed.

The electrically conductive resin paste having a thixotropic property to exhibit a viscosity of 200 Pa·s or less at a shear rate of 0.1 s⁻¹ and containing the thermosetting resin and the electrically conductive fillers is prepared. This electrically conductive resin paste is applied in such a way as to cover the above-described thick film layer 31 and extend beyond the end edge 34 of the thick film layer 31 by a dimension of 100 µm or more on the side surface 25 of the electronic component main body 22, followed by drying and heat-curing. In this manner, the electrically conductive resin layer 32 is formed.

In the above-described step, the applied electrically conductive resin paste itself tends to spread through wetting toward the midsection between end surfaces 23 and 24 of the electronic component main body 22. At this time, the electrically conductive fillers contained in the electrically conductive resin paste are in contact with each other and, thereby, a force facilitating the mutual bonding is exerted, so that the fillers tend to stay where they are. Consequently, merely a solvent in the electrically conductive resin paste and a resin component dissolved therein spread through wetting. As a result, a filler-free region 35 substantially not containing the electrically conductive filler is formed at the end portion of the electrically conductive resin layer 32.

Subsequently, the electrically conductive metal plating film is formed on the electrically conductive resin layer 32 by electroplating, so that the plating layer 33 is formed. The plating layer 33 is not formed on the filler-free region 35. In this manner, the width B of the filler-free region 35 not provided with the plating layer 33 can be adjusted by changing the viscosity of the electrically conductive resin paste applied for forming the electrically conductive resin layer 32. That is, the width B of the filler-free region 35 can be increased by reducing the viscosity of the electrically conductive resin paste. If the viscosity of the electrically conductive resin paste is too low, formation of the electrically conductive resin layer 32 having good appearance becomes difficult. Therefore, it is preferable that the viscosity thereof is 20 Pa·s or more.

In the laminated ceramic capacitor 21, as described above, the plating layer 33 is disposed in such a way as to cover the electrically conductive resin layer 32 except the region having a width B of 50 µm or more and extending along the end edge 37 of the electrically conductive resin layer 32, that is, the filler-free region 35. Therefore, the position of the end edge 36 of the plating layer 33 can be displaced from the end edge 37 of the electrically conductive resin layer 32 by a width B of 50 µm or more. Consequently, the end edge 36, on which the stress applied by the plating layer 33 to the electrically conductive resin layer 32 is concentrated during formation of the plating layer 33, during carrying in the production of the laminated ceramic capacitor 21, during soldering to the terminal electrodes 29 and 30, and the like, can be displaced from the end edge 37 of the electrically conductive resin layer 32 and, thereby, it is possible to make an inconvenience due to accidental peeling of the electrically conductive resin layer 32 before mounting of the laminated ceramic capacitor 21 hardly occur. As a result, when the wiring substrate is bent and an external force exceeding the acceptable range is applied to the laminated ceramic capacitor 21, the stress relaxation ability, which is intrinsic to the electrically conductive resin layer 32, to relax the stress by peeling can be exerted appropriately.

In the case where the above-described width B is less than 50 µm, the end edge 36 which is the stress concentration portion of the plating layer 33 and the end edge 37 which is the weakest bonding force portion of the electrically conductive resin layer 32 with respect to the electronic component main body 22 become too close to each other, and the electrically conductive resin layer 32 may be peeled accidentally because of the stress applied to the plating layer 33 during soldering or the like. The dimension A of the electrically conductive resin layer 32 extending beyond the end edge 34 of the thick film layer 32 is specified to be 100 µm or more. If this A is less than 100 µm, the stress relaxation ability of the electrically conductive resin layer 32 is not exerted sufficiently and, therefore, cracking may occur in the electronic component main body 22.

The experimental examples conducted for checking the effects of the present invention will be described below.

An electronic component main body of 3.2 mm length, 1.6 mm width, and 1.25 mm height for a laminated ceramic capacitor was prepared through a known process. The electronic component main body included internal electrodes containing nickel as a primary component and was designed in such a way that the target value of capacitance became 1,000 pF.

An electrically conductive metal paste containing copper as an electrically conductive component was applied to each of the end surfaces, at which internal electrodes were exposed, and a part of the side surface adjacent thereto of the above-described electronic component main body, followed by baking, so that a thick film layer serving as a substrate of a terminal electrode was formed.

An electrically conductive resin paste related to each sample shown in Table 1 was prepared. Table 1 shows the material of a powder which is contained in the electrically conductive resin paste and which serves as an electrically conductive filler, the type of a thermosetting resin contained in the electrically conductive resin paste, the viscosity of the electrically conductive resin paste, and the bonding force exerted by the electrically conductive resin paste after curing with respect to the electronic component main body.

A term "Ag-coated Cu" in the column "Electrically conductive filler" represents a silver-coated copper powder. A term "phenol" described in the column "Thermosetting resin" represents a resol type phenol resin.

The viscosity of the electrically conductive resin paste was adjusted by dilution with a solvent. Regarding the electrically conductive resin paste of each sample, the ratio of addition of the thermosetting resin was adjusted in such a way that the resistivity became 1 × 10⁻⁴ Ω·cm or less after curing.

**[Table 1]**

| Sample No. | Electrically conductive filler | Thermosetting resin | Viscosity [Pa·s] | Bonding force [N/mm²] |
|---|---|---|---|---|
| 1 | Ag | epoxy | 194 | 7.8 |
| 2 | Ag | phenol | 121 | 2.0 |
| 3 | Ag | phenol | 25 | 1.3 |
| 4 | Cu | epoxy | 38 | 6.4 |
| 5 | Cu | phenol | 172 | 1.1 |
| 6 | Cu | phenol | 77 | 0.8 |
| 7 | Ag-coated Cu | epoxy | 56 | 5.7 |
| 8 | Ag-coated Cu | phenol | 168 | 9.8 |
| 9 | Ag-coated Cu | phenol | 93 | 1.5 |
| 10 | Ag-coated Cu | phenol | 22 | 0.3 |
| 11 | Ag | epoxy | 267 | 13.8 |
| 12 | Cu | phenol | 321 | 7.8 |
| 13 | Ag-coated Cu | epoxy | 1020 | 6.4 |
| 14 | Ag-coated Cu | phenol | 865 | 0.3 |
| 15 | Ag-coated Cu | phenol | 762 | 1.5 |
| 16 | Ag-coated Cu | phenol | 585 | 1.5 |
| 17 | Ag-coated Cu | phenol | 183 | 8.3 |

The electrically conductive resin paste of each sample shown in Table 1 was applied to a predetermined region of the electronic component main body provided with the thick film layer, followed by drying and heat-curing, so that an electrically conductive resin layer was formed.

A nickel plating film having a thickness of 3 µm was formed by electroplating on the electrically conductive resin layer, and a tin plating film having a thickness of 3 µm was formed thereon, so that a plating layer was formed. The interval of the thus formed terminal electrodes composed of the thick film layer, the electrically conductive resin layer, and the plating layer was 1.5 mm or more.

Regarding each of the thus obtained samples, the dimension A and the width B, as shown in Fig. 2, were measured. The results are shown in Table 2.

**[Table 2]**

| Sample No. | A [µm] | B [µm] |
|---|---|---|
| 1 | 356 | 52 |
| 2 | 124 | 77 |
| 3 | 588 | 274 |
| 4 | 362 | 145 |
| 5 | 105 | 53 |
| 6 | 226 | 108 |
| 7 | 284 | 159 |
| 8 | 100 | 86 |
| 9 | 248 | 133 |
| 10 | 691 | 502 |
| 11 | 85 | 26 |
| 12 | 37 | 31 |
| 13 | 73 | 0 |
| 14 | 0 | 0 |
| 15 | 5 | 0 |
| 16 | 126 | 35 |
| 17 | 72 | 104 |

Regarding each sample, whether peeling of the electrically conductive resin layer occurred or not was evaluated in each case of after plating for forming the above-described plating layer, after reflow soldering, and after flow soldering and, in addition, the incidence of short-circuit failure in a substrate bending test was evaluated.

For more details, regarding the peeling of the electrically conductive resin layer after plating, 100 test pieces of each sample were evaluated by observation with a stereoscopic microscope on the basis of whether peeling occurred or not.

Regarding the peeling of the electrically conductive resin layer after reflow soldering, 100 test pieces of each sample were mounted on a glass epoxy substrate, and reflow soldering was conducted by using Sn-Ag-Cu solder with a profile in which a preheating zone was set at 150°C to 180°C/90 sec and a main heating zone was set at 240°C or higher (maximum temperature 260°C)/60 sec. Thereafter, the evaluation was conducted by appearance observation with a stereoscopic microscope and observation of polished surface of a cross-section defined by the dimension in a longitudinal direction and the dimension in a thickness direction of the electronic component main body on the basis of whether peeling of the electrically conductive resin layer occurred or not.

Regarding the peeling of the electrically conductive resin layer after flow soldering, 100 test pieces of each sample were mounted on a glass epoxy substrate, and double wave flow soldering was conducted by using molten Sn-3.0Ag-0.5Cu solder set at 260°C. Thereafter, the evaluation was conducted by appearance observation with a stereoscopic microscope and observation of polished surface of a cross-section defined by the dimension in a longitudinal direction and the dimension in a thickness direction of the electronic component main body on the basis of whether peeling of the electrically conductive resin layer occurred or not.

Regarding the incidence of short-circuit failure, a copper foil land having a distance between lands of 2.2 mm, a dimension in the width direction of 2.0 mm, and a dimension in the longitudinal direction of 2.8 mm was formed in such a way that the barycenter position was allowed to agree with that of the glass epoxy substrate of 100 mm length, 40 mm width, and 1.6 mm height. After a solder paste was printed on a test substrate by using a metal mask having a thickness of 150 µm, each sample was mounted and reflow soldering was conducted. Regarding 100 test pieces of each sample, the test substrate was bended up to a maximum amount of bending of 6 mm on the basis of the test condition described in JIS C 5102-1994. Subsequently, whether short-circuit failure due to IR shock occurred or not was checked and the incidence thereof was determined.

The results thereof are shown in Table 3.

**[Table 3]**

| Sample No. | Peeling of electrically conductive resin layer | | | Incidence of short-circuit failure [%] |
|---|---|---|---|---|
| | After plating | After reflow soldering | After flow soldering | |
| 1 | none | none | none | 0 |
| 2 | none | none | none | 0 |
| 3 | none | none | none | 0 |
| 4 | none | none | none | 0 |
| 5 | none | none | none | 0 |
| 6 | none | none | none | 0 |
| 7 | none | none | none | 0 |
| 8 | none | none | none | 0 |
| 9 | none | none | none | 0 |
| 10 | none | none | none | 0 |
| 11 | none | none | none | 6 |
| 12 | none | none | occurred | 3 |
| 13 | none | occurred | occurred | 5 |
| 14 | occurred | occurred | occurred | 12 |
| 15 | none | occurred | occurred | 10 |
| 16 | none | none | occurred | 2 |
| 17 | none | none | none | 1 |

Samples 1 to 10 satisfy the condition of A ≥ 100 µm and B ≥ 50 µm, as shown in Table 2. Furthermore, in Samples 1 to 10, the electrically conductive resin layers have bonding forces within the range of 0.3 to 10 N/mm², as shown in Table 1.

Regarding Samples 1 to 10, as shown in Table 3, peeling of the electrically conductive resin layer does not occur in every case of after plating, after reflow soldering, and after flow soldering. The reason for this is believed to be that not only the electrically conductive resin layer itself absorbs the stress, but also the end edge of the electrically conductive resin layer is displaced from the end edge of the thick film layer by a dimension of 100 µm or more, the end edge of the plating layer is displaced from the end edge of the electrically conductive resin layer by a dimension of 50 µm or more and, thereby, concentration of the stress, which becomes a starting point of cracking, is relaxed sufficiently.

As is also shown in Table 3, regarding Samples 1 to 10, the incidence of short-circuit failure is 0%. In the case where a mechanical stress due to bending of the substrate is applied to the laminated ceramic capacitor serving as a sample, the stress is concentrated on the end edge of the plating layer on which a solder fillet is formed, and the stress is much larger than the stress during formation of the plating layer or the stress during soldering. However, it is believed that the above-described stress is efficiently relaxed by peeling of the electrically conductive resin layer at the interface to the electronic component main body/the plating layer and, as a result, an occurrence of cracking in the electronic component main body is suppressed.

On the other hand, regarding Samples 11 to 17 in which A is less than 100 µm and/or B is less than 50 µm, peeling of the electrically conductive resin layer occurs or a short-circuit failure occurs. In particular, regarding Sample 16, A is 100 µm or more, but B is less than 50 µm, as shown in Table 2. Consequently, peeling of the electrically conductive resin layer occurs after flow soldering and, in addition, a short-circuit failure occurs, as shown in Table 3. Regarding Sample 17, B is 50 µm or more, but A is less than 100 µm, as shown in Table 2. Consequently, a short-circuit failure occurs, as shown in Table 3.

In the above description, the present invention has been explained with reference to the laminated ceramic capacitor as an example of the laminated ceramic electronic component. However, the present invention can be similarly applied to laminated ceramic electronic components other than the laminated ceramic capacitor or ceramic electronic components not having the laminated structure, that is, having a so-called single layer structure.

## Claims

1. A ceramic electronic component comprising:
an electronic component main body (22) which is formed from ceramic and which has two end surfaces (23, 24) opposite to each other and a side surface (25) joining them; and
terminal electrodes (29, 30) disposed in such a way as to cover each of the end surfaces of the electronic component main body (22) and extend to a part of the side surface (25) from each of the end surfaces (23, 24),
wherein the terminal electrode (29, 30) includes,
a thick film layer (31) which is a thick film formed from an electrically conductive metal by baking and which is disposed on each of the end surfaces (29, 30) and a part of the side surface (25) of the electronic component main body (22),
a dried and heat-cured electrically conductive resin layer (32) which contains a thermosetting resin and electrically conductive fillers, which is disposed in such a way as to cover the thick film layer (31) and extend beyond the end edge of the thick film layer (31) by a dimension of 100µm or more on the side surface (25), and which has a region substantially not containing the electrically conductive filler at an end portion of the part located on the side surface (25), and
a plating layer (33) which is formed from an electrically conductive metal plating film and which is disposed in such a way as to cover the electrically conductive resin layer (32) except a region having a width of 50µm or more and extending along the end edge of the electrically conductive resin layer (32).

2. The ceramic electronic component according to Claim 1, wherein the thermosetting resin contained in the electrically conductive resin layer (32) is a phenol resin and the electrically conductive filler contained in the electrically conductive resin layer (32) is a silver-coated copper powder.

3. A method for manufacturing a ceramic electronic component, the method comprising the steps of:
preparing an electronic component main body (22) which is formed from ceramic and which has two end surfaces (23, 24) opposite to each other and a side surface (25) joining them; and
forming terminal electrodes (29, 30) in such a way as to cover each of the end surfaces (23, 24) of the electronic component main body (22) and extend to a part of the side surface (25) from each of the end surfaces (23, 24),
wherein forming the terminal electrodes (29, 30) includes the steps of
applying an electrically conductive metal paste to each of the end surfaces (29, 30) and a part of the side surface (25) of the electronic component main body (22) and baking the electrically conductive metal paste, so as to form a thick film layer (31),
applying an electrically conductive resin paste, which has a thixotropic property thereby exhibiting a viscosity of 200 Pa·s or less at a shear rate of 0.1 s⁻¹ and which contains a thermosetting resin and electrically conductive fillers, in such a way as to cover the thick film layer (31) and extend beyond the end edge of the thick film layer (31) by a dimension of 100µm or more on the side surface (25), followed by drying and heat-curing, so as to form an electrically conductive resin layer (32), and
forming an electrically conductive metal plating layer (33) on the electrically conductive resin layer (32) by electroplating in such a way as to cover the electrically conductive resin layer (32) except a region having a width of 50µm or more and extending along the end edge of the electrically conductive resin layer (32), so as to form a plating layer.

4. The method for manufacturing a ceramic electronic component according to Claim 3, wherein the thermosetting resin is a phenol resin and the electrically conductive fillers are silver-coated copper powder.

## Patentansprüche

1. Eine Keramikelektronikkomponente, die folgende Merkmale aufweist:
einen Elektronikkomponente-Hauptkörper (22), der aus Keramik gebildet ist und der zwei Endoberflächen (23, 24), die einander gegenüberliegen, und eine Seitenoberfläche (25), die diese verbindet, aufweist; und
Anschlusselektroden (29, 30), die in einer derartigen Weise angeordnet sind, um jede der Endoberflächen des Elektronikkomponente-Hauptkörpers (22) zu bedecken und sich von jeder der Endoberflächen (23, 24) zu einem Teil der Seitenoberfläche (25) zu erstrecken,
wobei die Anschlusselektrode (29, 30) folgende Merkmale umfasst:
eine Dickfilmschicht (31), die ein Dickfilm ist, der durch Brennen aus einem elektrisch leitfähigen Metall gebildet ist, und die auf jeder der Endoberflächen (29, 30) und einem Teil der Seitenoberfläche (25) des Elektronikkomponente-Haupt-körpers (22) angeordnet ist,
eine getrocknete und wärmegehärtete elektrisch leitfähige Harzschicht (32), die ein wärmehärtbares Harz und elektrisch leitfähige Füller beinhaltet, die in einer derartigen Weise angeordnet ist, um die Dickfilmschicht (31) zu bedecken und sich um eine Abmessung von 100 µm oder mehr auf der Seitenoberfläche (25) über den Endrand der Dickfilmschicht (31) hinaus zu erstrecken, und die eine Region, die den elektrisch leitfähigen Füller im Wesentlichen nicht beinhaltet, an einem Endabschnitt des Teils, der sich auf der Seitenoberfläche (25) befindet, aufweist, und
eine Plattierungsschicht (33), die aus einem Plattierungsfilm aus einem elektrisch leitfähigen Metall gebildet ist, und die auf eine derartige Weise angeordnet ist, um die elektrisch leitfähige Harzschicht (32) mit Ausnahme einer Region zu bedecken, die eine Breite von 50 µm oder mehr aufweist und sich entlang des Endrands der elektrisch leitfähigen Harzschicht (32) erstreckt.

2. Die Keramikelektronikkomponente gemäß Anspruch 1, bei der das wärmehärtbare Harz, das in der elektrisch leitfähigen Harzschicht (32) beinhaltet ist, ein Phenolharz ist und der elektrisch leitfähige Füller, der in der elektrisch leitfähigen Harzschicht (32) beinhaltet ist, ein mit Silber beschichtetes Kupferpulver ist.

3. Ein Verfahren zum Herstellen einer Keramikelektronikkomponente, wobei das Verfahren folgende Schritte aufweist:
Bereitstellen eines Elektronikkomponente-Hauptkörpers (22), der aus Keramik gebildet ist und der zwei Endoberflächen (23, 24), die einander gegenüberliegen, und eine Seitenoberfläche (25), die diese verbindet, aufweist; und
Bilden von Anschlusselektroden (29, 30) in einer derartigen Weise, dass diese jede der Endoberflächen (23, 24) des Elektronikkomponente-Hauptkörpers (22) bedecken und sich von jeder der Endoberflächen (23, 24) zu einem Teil der Seitenoberfläche (25) erstrecken,
wobei das Bilden der Anschlusselektroden (29, 30) folgende Schritte umfasst:
Auftragen einer elektrisch leitfähigen Metallpaste auf jede der Endoberflächen (29, 30) und einen Teil der Seitenoberfläche (25) des Elektronikkomponente-Haupt-körpers (22) und Brennen der elektrisch leitfähigen Metallpaste, um so eine Dickfilmschicht (31) zu bilden,
Auftragen einer elektrisch leitfähigen Harzpaste, die eine thixotrope Eigenschaft aufweist, wodurch sie eine Viskosität von 200 Pa*s oder weniger bei einer ScherRate von 0,1 s⁻¹ aufweist, und die ein wärmehärtbares Harz und elektrisch leitfähige Füller beinhaltet, auf eine derartige Weise, um die Dickfilmschicht (31) zu bedecken und sich um eine Abmessung von 100 µm oder mehr auf der Seitenoberfläche (25) über den Endrand der Dickfilmschicht (31) hinaus zu erstrecken, gefolgt durch Trocknen und Wärmehärten, um so eine elektrisch leitfähige Harzschicht (32) zu bilden, und
Bilden einer Plattierungsschicht (33) aus elektrisch leitfähigem Metall auf der elektrisch leitfähigen Harzschicht (32) durch Elektroplattieren, auf eine derartige Weise, um die elektrisch leitfähige Harzschicht (32) mit Ausnahme einer Region, die eine Breite von 50 µm oder mehr aufweist und sich entlang des Endrands der elektrisch leitfähigen Harzschicht (32) erstreckt, zu bedecken, um so eine Plattierungsschicht zu bilden.

4. Das Verfahren zum Herstellen einer Keramikelektronikkomponente gemäß Anspruch 3, bei dem das wärmehärtbare Harz ein Phenolharz ist und die elektrisch leitfähigen Füller mit Silber beschichtetes Kupferpulver sind.

## Revendications

1. Composant électronique en céramique comprenant :
un corps principal de composant électronique (22) qui est formé à partir d'une céramique et qui comporte deux surfaces d'extrémité (23, 24) à l'opposé l'une de l'autre et une surface latérale (25) les joignant ; et
des électrodes de borne (29, 30) disposées de manière à recouvrir chacune des surfaces d'extrémité du corps principal de composant électronique (22) et à s'étendre vers une partie de la surface latérale (25) à partir de chacune des surfaces d'extrémité (23, 24),
dans lequel l'électrode de borne (29, 30) comprend :
une couche de film épaisse (31) qui est un film épais formé à partir d'un métal électriquement conducteur par cuisson et qui est disposée sur chacune des surfaces d'extrémité (29, 30) et une partie de la surface latérale (25) du corps principal de composant électronique (22),
une couche de résine électriquement conductrice durcie thermiquement et séchée (32) qui contient une résine thermodurcissable et des agents de remplissage électriquement conducteurs, qui est disposée de manière à recouvrir la couche de film épaisse (31) et à s'étendre au-delà du bord d'extrémité de la couche de film épaisse (31) d'une dimension de 100 µm ou plus sur la surface latérale (25), et qui comporte une région ne contenant pas sensiblement l'agent de remplissage électriquement conducteur dans une partie d'extrémité de la partie située sur la surface latérale (25), et
une couche de métallisation (33) qui est formée à partir d'un film de métallisation en un métal électriquement conducteur et qui est disposée de manière à recouvrir la couche de résine électriquement conductrice (32), à l'exception d'une région ayant une largeur de 50 µm ou plus et s'étendant le long du bord d'extrémité de la couche de résine électriquement conductrice (32).

2. Composant électronique en céramique selon la revendication 1, dans lequel la résine thermodurcissable contenue dans la couche de résine électriquement conductrice (32) est une résine phénolique et l'agent de remplissage électriquement conducteur contenu dans la couche de résine électriquement conductrice (32) est une poudre de cuivre revêtue d'argent.

3. Procédé de fabrication d'un composant électronique en céramique, le procédé comprenant les étapes :
de préparation d'un corps principal de composant électronique (22) qui est formé à partir d'une céramique et qui comporte deux surfaces d'extrémité (23, 24) à l'opposé l'une de l'autre et une surface latérale (25) les joignant ; et
de formation d'électrodes de borne (29, 30) de manière à recouvrir chacune des surfaces d'extrémité (23, 24) du corps principal de composant électronique (22) et à s'étendre vers une partie de la surface latérale (25) à partir de chacune des surfaces d'extrémité (23, 24),
dans lequel la formation des électrodes de borne (29, 30) comprend les étapes :
d'application d'une pâte métallique électriquement conductrice à chacune des surfaces d'extrémité (29, 30) et à une partie de la surface latérale (25) du corps principal de composant électronique (22) et de cuisson de la pâte métallique électriquement conductrice, de manière à former une couche de film épaisse (31),
d'application d'une pâte de résine électriquement conductrice, qui a une propriété thixotropique présentant de ce fait une viscosité de 200 Pa.s ou moins à un taux de cisaillement de 0,1 s⁻¹ et qui contient une résine thermodurcissable et des agents de remplissage électriquement conducteurs, de manière à recouvrir la couche de film épaisse (31) et à s'étendre au-delà du bord d'extrémité de la couche de film épaisse (31) d'une dimension de 100 µm ou plus sur la surface latérale (25), suivie d'un séchage et d'un durcissement thermique, de manière à former une couche de résine électriquement conductrice (32), et
de formation d'une couche de métallisation en un métal électriquement conducteur (33) sur la couche de résine électriquement conductrice (32) par un dépôt électrolytique de manière à recouvrir la couche de résine électriquement conductrice (32), à l'exception d'une région ayant une largeur de 50 µm ou plus et s'étendant le long du bord d'extrémité de la couche de résine électriquement conductrice (32), de manière à former une couche de métallisation.

4. Procédé de fabrication d'un composant électronique en céramique selon la revendication 3, dans lequel la résine thermodurcissable est une résine phénolique et les agents de remplissage électriquement conducteurs sont une poudre de cuivre revêtue d'argent.
